Europäisches Patentamt

European Patent Office

Office européen des brevets

(19)

(11) Publication number: **0 091 600**
A2

## (12) EUROPEAN PATENT APPLICATION

(21) Application number: 83103066.3

(22) Date of filing: 28.03.83

(51) Int. Cl.³: **G 05 D 9/00**

(30) Priority: 09.04.82 IT 2067682

(43) Date of publication of application:
19.10.83 Bulletin 83/42

(84) Designated Contracting States:
AT BE CH DE FR GB LI LU NL SE

(71) Applicant: Libra, S.A.

I-47031 Galazzano(SM)

(72) Inventor: Brandi, Alfredo
Via Romanus de Capraria 13
San Marino(IT)

(74) Representative: Vatti, Paolo, Dr. Ing. et al,
Fumero - Studio Consulenza Brevetti
Widenmayerstrasse 4/1
D-8000 München 22(DE)

(54) Device for automatically adjusting the level of a pumping tank.

(57) In an automatic control device for the level in a pumping tank for treatment plants for turbid liquids containing fine solids in suspension, for example turbid water containing argillaceous mud and sand, the device utilising the residual return liquid from the treatment, a portion of the pipe for said return liquid is disposed horizontally at a predetermined level in said tank, and comprises mechanical or hydraulic means through which the residual return liquid is made to flow into the tank when the level therein falls below the predetermined level.

**FIG. 1**

EP 0 091 600 A2

0091600

## DEVICE FOR AUTOMATICALLY ADJUSTING THE LEVEL OF A PUMPING TANK

This invention relates to an automatic control device for the level in a pumping tank for treatment plants for turbid liquids containing fine solids in suspension, for example turbid water containing argillaceous mud and sand.

Treatment plants for turbid water containing argillaceous mud and sand are known, in which pumps and cyclones are used, in particular in order to recover sand of a particle size suitable for industrial use. In these plants, the pumps are fed by sheet metal pumping tanks provided with an overflow, and into which the turbid water is fed from above. A pump withdraws said water in proximity to the tank bottom, and feeds it to a cyclone for separation. The use of this method is possible and convenient only if certain that the turbid water is of approximately constant feed rate and thus maintains a certain predetermined level in the pumping tank, otherwise the pump operation is no longer regular, and if the feed is interrupted for more than a short time the pump can even become irreparably damaged.

For the aforesaid reasons, in some of the said plants the tank has been fitted with devices arranged to maintain a constant level in the tank, for example by restoring the falling level by means of the residual return water from the treatment.

The methods used up to the present time are however heavy in terms of machinery and complicated, and usually comprise valve means which often give rise to drawbacks during use because of the ease with which they can become jammed or damaged as a consequence of the abrasive nature of the treated suspensions.

The object of the present invention is to provide an automatic control device for the level in a pumping tank for treatment plants for turbid water, and more generally for turbid liquids containing fine solids in suspension, which is extremely simple and therefore ensures absolutely reliable operation free from damage and jamming by the treated turbid liquids.

This device, of the type which utilises the residual return liquid from the treatment for controlling the level in the pumping tank, is characterised in that the pipe for said return liquid comprises a horizontal portion disposed at the predetermined turbid liquid level in the pumping tank, and means, disposed in said portion, through which the residual return liquid is made to flow into said tank when the level in this latter falls below the predetermined level.

In a first preferred embodiment of the device, said means are mechanical and consist of the fact that part of said portion of the liquid return pipe is in the form of a floating channel which is hinged at one end and free at its other end.

In a second preferred embodiment of the device, said means are hydraulic and consist of a vertical branch from said horizontal portion of the liquid return pipe.

The invention is described hereinafter in greater detail by way of example, with reference to the accompanying drawings in which:

Figure 1 is a diagrammatic section through a first embodiment of the device according to the invention, applied to a turbid liquid treatment plant;

Figure 2 is a detailed illustration to an enlarged scale of an operating stage of the device of Figure 1; and

Figure 3 is a diagrammatic view of a second embodiment of the device according to the invention, applied to a turbid water treatment plant.

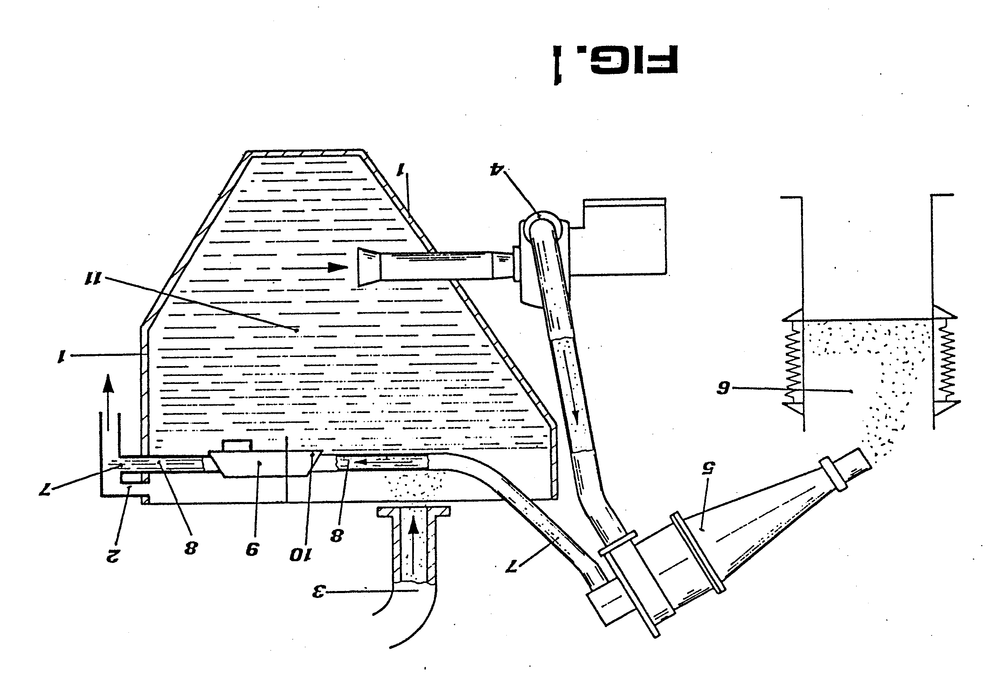

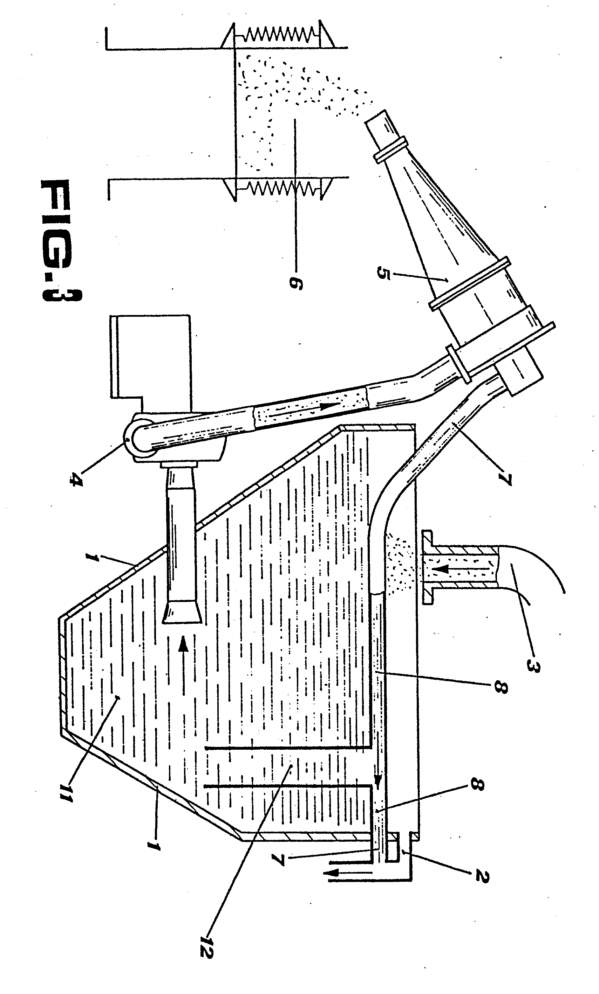

With reference to the drawings, the treatment plant for turbid water containing argillaceous mud and sand shown in Figures 1 and 3 comprises, in known manner, a metal tank 1 with an overflow 2 and open at its top, where it receives the turbid water fed by a feed pipe 3, a pump 4 which draws the turbid water from the bottom of the tank 1, a cyclone 5 for treating the water pumped by the pump 4, and a vibrating screen unit 6 for the sand separated by the cyclone 5. A pipe 7 is also provided in known manner for discharging the treatment residual water from the cyclone 5.

The invention provides for a portion 8 of the residual water discharge pipe 7 to be disposed horizontally at a predetermined level in the tank 1, said level being lower than the level of the overflow 2 as can be seen.

In the embodiment of Figure 1 of the invention, a part of the portion 8 of the pipe 7 is in the form of an open floating channel 9 which is hinged at one end at 10 and is free at its other end.

While the level of the turbid water 11 contained in the tank 1 is equal to or higher than that of the bottom of the floating channel 9, the free end of this latter is urged upwards and the continuity of the pipe 7 is therefore maintained, so that the residual return water from the cyclone 5 is discharged downstream of the tank 1 as shown in Figure 1.

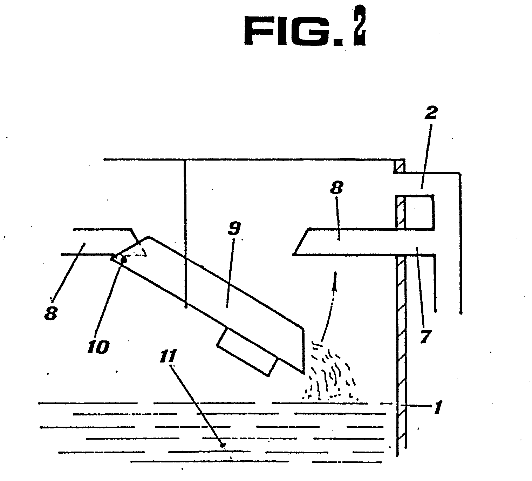

However, if the level of the water 11 in the tank 1 falls, the channel 9, which is no longer supported by buoyancy, oscillates under its own weight about the pivot 10 as shown in Figure 2, and thus interrupts continuity of the pipe 7, to dis-

- 4 -

charge the residual return water into the tank 1. In this manner, the level in this latter is able to rise, so that the pump 4 is never without feed.

In the embodiment of Figure 3 of the invention, the horizontal portion 8 of the pipe 7 in the tank 1 comprises a vertical branch 12.

During operation, because of the known principle of communicating vessels, the water level in the tank is equal to the water level in the branch 12 of the portion 8 of the pipe 7. Thus, when the water level in the tank 1 reaches the portion 8 of the pipe 7, the water entering the pipe 7 from the cyclone 5 is fed to discharge by sliding over the surface of the water contained in the branch 12. If however the level in the tank 1 falls, it also falls in the branch 12, and the water entering the portion 8 of the pipe 7 from the cyclone 5 is deviated into the tank 1 through the branch 12. The predetermined water level in the tank is again quickly restored, to prevent damage to the pump 2 due to lack of feed.

Other practical embodiments of the invention can also lie within the scope of the inventive idea. In particular, modifications to the two embodiments of the invention illustrated and described in detail herein can easily be devised by experts of the art.

The invention is applicable not only to turbid water treatment, as already stated, but also to the treatment of other turbid liquids of any kind containing fine solids in suspension in the most widespread fields, for example in foundries, in rolling mills etc., to allow important recovery of useful materials.

## CLAIMS

1. An automatic control device for the level in a pumping tank for treatment plants for turbid liquids containing fine solids in suspension, for example turbid water containing argillaceous mud and sand, the device utilising the residual return liquid from the treatment, characterised in that the pipe for said return liquid comprises a horizontal portion disposed at a predetermined turbid liquid level in the pumping tank, and means, disposed **along said** portion, through which the residual return liquid is made to flow into said tank when the level in this latter falls below the predetermined level.

2. A device as claimed in claim 1, wherein said means are mechanical and consist of the fact that part of said portion of the liquid return pipe is in the form of a floating channel which is hinged at one end and free at its other end.

3. A device as claimed in claim 1, wherein said means are hydraulic and consist of a branch from said horizontal portion of the liquid return pipe.

# FIG. 1

0091600

# FIG. 2

FIG.3